(19) Europäisches Patentamt
European Patent Office
Office européen des brevets

(11) Veröffentlichungsnummer : **0 093 419**
**B1**

(12) # EUROPÄISCHE PATENTSCHRIFT

(45) Veröffentlichungstag der Patentschrift : **07.08.85**

(51) Int. Cl.⁴ : **C 07 F 9/52**

(21) Anmeldenummer : **83104194.2**

(22) Anmeldetag : **29.04.83**

(54) **Verfahren zur Herstellung von Chlor-diphenyl-phosphan.**

(30) Priorität : **03.05.82 DE 3216379**

(43) Veröffentlichungstag der Anmeldung : **09.11.83 Patentblatt 83/45**

(45) Bekanntmachung des Hinweises auf die Patenterteilung : **07.08.85 Patentblatt 85/32**

(84) Benannte Vertragsstaaten : **AT BE CH DE FR GB IT LI NL SE**

(56) Entgegenhaltungen :
**SU-A- 943 243**
**US-A- 3 094 559**
**ZEITSCHRIFT FÜR ANORGANISCHE UND ALLGEMEINE CHEMIE, Band 376, Heft 1, August 1970, Seiten 37-43, Johann Ambrosius Barth, Leipzig, DD K. SOMMER: "Zur Spaltung tertiärer Phosphine. I."**

(73) Patentinhaber : **HOECHST AKTIENGESELLSCHAFT**
**Postfach 80 03 20**
**D-6230 Frankfurt am Main 80 (DE)**

(72) Erfinder : **Kleiner, Hans-Jerg, Dr.**
**Altkönigstrasse 11a**
**D-6242 Kronberg/Taunus (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 093 419 B1

**Beschreibung**

Chlor-diphenyl-phosphan $(C_6H_5)_2PCl$ ist hauptsächlich ein wertvolles Zwischenprodukt auf verschiedenen Sachgebieten. Es dient z. B. zur Herstellung von Diphenylphosphanoxid $(C_6H_5)_2P(O)H$, das zur Synthese zahlreicher tertiärer Phosphanoxide geeignet ist. Weiterhin lassen sich aus Chlordiphenylphosphan auf dem Weg über die entsprechenden Diphenylphosphinigsäureester $(C_6H_5)_2POR$ (R = organischer Rest) bestimmte Acylphosphanoxidverbindungen herstellen, die sich ihrerseits als Photoinitiatoren in photopolymerisierbaren Massen eignen (EP-A2-7508).

Zur Herstellung des Chlordiphenyl-phosphans ist eine Reihe verschiedener Methoden bekannt. Eine solche ist z. B. beschrieben von K. Sommer auf S. 39 der Zeitschrift für Anorganische und Allgemeine Chemie *376* (1970) ; die Methode besteht in der Umsetzung von Triphenylphosphan $(C_6H_5)_3P$ und Phosphortrichlorid $PCl_3$ bei etwa 280 °C unter Druck, wobei allerdings keine näheren Angaben über den Druck und etwa auch die Reaktionszeit gemacht sind. Bei einem Einsatz der Ausgangsstoffe im Verhältnis — gemeint ist wohl das Molverhältnis — 1 : 1 sollen sich nach der Reaktionsgleichung

$$(C_6H_5)_3P + PCl_3 \rightarrow C_6H_5PCl_2 + (C_6H_5)_2PCl$$

ungefähr gleiche Mengen — gemeint sind wohl gleiche molare Mengen — Dichlor-phenyl-phosphan $C_6H_5PCl$ und Chlor-diphenyl-phosphan $(C_6H_5)_2PCl$ bilden.

Die Reaktionsprodukte lassen sich wegen ihrer unterschiedlichen Siedepunkte durch Destillation trennen. Bei z. B. 26,6 Pa liegt der Siedepunkt des Dichlor-phenyl-phosphans bei 56-58 °C, derjenige des Chlor-diphenyl-phosphans bei 115 bis 120 °C.

Durch Zugabe von wenig Aluminiumchlorid $AlCl_3$ soll sich das Gleichgewicht zugunsten des Dichlor-phenyl-phosphans verschieben und die Ausbeuten an Chlor-diphenyl-phosphan sollen unter 10 % sinken. Wenn man bei dieser Arbeitsweise das Molverhältnis der Ausgangsstoffe Triphenylphosphan und Phosphortrichlorid gleich 1 : 3 wählt, soll ausschließlich Dichlor-phenyl-phosphan (neben unverbrauchtem Phosphortrichlorid) erhalten werden.

Darüber ob unter der katalytischen Wirkung von $AlCl_3$ und etwa einem Überschuß an Triphenylphosphan auch praktisch ausschließlich Chlor-diphenyl-phosphan erhalten werden kann, ist in der zitierten Literaturstelle nichts ausgesagt. Selbst wenn man so durch Umsetzung von überschüssigem Triphenylphosphan und Phosphortrichlorid zu praktisch ausschließlich Chlor-diphenyl-phosphan käme, wäre für diese Verfahrensweise die Notwendigkeit des Einsatzes eines Katalysators ($AlCl_3$) von gewissem Nachteil.

Ohne den Zusatz von $AlCl_3$ wird aber — wie eigene Versuche (bei ca. 280 °C unter autogenem Druck und einer Reaktionszeit von ca. 6 Stunden) ergeben haben — praktisch keine Umsetzung erzielt. Dieser Befund steht im übrigen auch im Einklang mit einer älteren Veröffentlichung [S. 303 des auf S. 295 von Liebigs Annalen der Chemie *229* (1885) beginnenden Artikels von Michaelis und von Soden], wonach durch Erhitzen von Triphenylphosphan mit Phosphortrichlorid auf 290 bis 310 °C im Bombenrohr kein Chlor-phenyl-phosphan erhalten wurde. Nach dem Verfahren der gleichzeitig eingereichten Patentanmeldung EP-A1-0 093 420 ist es nun möglich, Triphenylphosphan und Phosphortrichlorid ohne Zusatz eines Katalysators bei Temperaturen von 320 bis 700 °C mit hohen Ausbeuten zu Dichlor-phenylphosphan und Chlordiphenyl-phosphan umzusetzen ; im Temperaturbereich von 320 bis 500 °C wird dabei vorzugsweise unter erhöhtem Druck — insbesondere unter autogenem Druck —, im Temperaturbereich von 500 bis 700 °C vorzugsweise unter Normaldruck gearbeitet. Durch diese Verfahrensweise gelingt es, durch eine Überschuß des einen $[(C_6H_5)_3P]$ oder des anderen ($PCl_3$) Ausgangsstoffes von den möglichen Endprodukten überwiegend das eine (Chlor-diphenyl-phosphan) oder das andere (Dichlor-phenyl-phosphan) zu erhalten. Bei einem nicht zu hohen Überschuß eines Ausgangsstoffes erhält man jedoch praktisch immer Gemische der beiden Endprodukte, im Falle eines nicht zu hohen Überschusses z. B. des Triphenyl-phosphans ein Gemisch aus hauptsächlich Chlor-diphenyl-phosphan und einer geringeren — aber nicht unwesentlichen — Menge Dichlor-phenyl-phosphan.

In dem Bestreben, auch das Dichlor-phenyl-phosphan ohne Verwendung eines Katalysators in Chlor-diphenyl-phosphan umzuwandeln, wurde nun gefunden, daß dies durch Umsetzung von Dichlor-phenylphosphan mit Triphenylphosphan bei Temperaturen zwischen 300 und 700 °C möglich ist.

Auf diese Weise läßt sich das nach der katalysatorfreien Umsetzung von Triphenylphosphan mit Phosphortrichlorid bei 320-700 °C ohne einen zu hohen Überschuß an Triphenyl-phosphan erhaltene Gemisch aus hauptsächlich Chlor-diphenyl-phosphan und weniger Dichlor-phenyl-phosphan praktisch vollständig in das gewünschte Chlor-diphenyl-phosphan umwandeln. Natürlich läßt sich diese Umwandlungsmöglichkeit auch auf anderweitig erhältliches bzw. verfügbares Dichlor-phenyl-phosphan anwenden.

Erfindungsgegenstand ist somit ein Verfahren zur Herstellung von Chlor-diphenyl-phosphan durch Umsetzung einer Phosphor-chlor-Verbindung mit Triphenylphosphan bei erhöhter Temperatur,

das dadurch gekennzeichnet ist, daß man als Phosphorchlorverbindung Dichlor-phenyl-phosphan verwendet und die Umsetzung bei Temperaturen zwischen 300 und 700 °C durchführt.

Die Umsetzung verläuft nach folgender Reaktionsgleichung :

$$C_6H_5PCl_2 + (C_6H_5)_3P \rightarrow 2(C_6H_5)_2PCl$$

Das Gelingen dieser Reaktion in dem angegebenen Temperaturbereich war außerordentlich überraschend, weil nämlich (nach eigenen Versuchen) bei etwa 280 °C und autogenem Druck zwischen Dichlor-phenyl-phosphan und Triphenylphosphan keine oder jedenfalls praktisch keine Reaktion erfolgt. Es war daher nicht zu erwarten, daß ab einer nur etwa 20° höheren Temperatur die Reaktion dann glatt und mit hohen Ausbeuten an dem gewünschten Chlor-diphenyl-phosphan abläuft.

Außerdem war bei den erfindungsgemäß angewandten relativ hohen Temperaturen, insbesondere denjenigen über etwa 500 °C, eher eine Zersetzung jedenfalls des Ausgangsprodukts Triphenylphosphan als dessen Reaktion mit Dichlor-phenyl-phosphan zu erwarten, weil sich Triphenyl-phosphan nämlich nach S. 302 des vorher zitierten Artikels von Michaelis und von Soden in Liebigs Annalen der Chemie *229* (1885) schon bei 360 °C teilweise zersetzen soll.

Im unteren Teil des Temperaturbereichs des erfindungsgemäßen Verfahrens — d. i. zwischen 300 und 500 °C — wird bevorzugt in einem geschlossenen Gefäß unter erhöhtem Druck, insbesondere dem sich einstellenden autogenen Druck (in der Regel zwischen etwa 5 und 50 bar) gearbeitet. Bevorzugt sind hier Temperaturen zwischen 340 und 400 °C, insbesondere zwischen 350 und 370 °C.

Die Reaktionszeiten liegen bei dieser Arbeitsweise normalerweise zwischen etwa 10 Minuten und 12 Stunden, wobei die kürzeren Reaktionszeiten bei den höheren Temperaturen und die längeren Reaktionszeiten bei den niedrigeren Temperaturen gelten.

Im oberen Teil des Temperaturbereiches des erfindungsgemäßen Verfahrens — d. i. zwischen 500 und 700 °C — ist das Arbeiten bei Normaldruck bevorzugt.

Der bevorzugte Temperaturbereich liegt hier zwischen 550 und 620 °C.

Bei dieser Arbeitsweise sind die Reaktionszeiten von der Größenordnung von Sekunden.

Die Reaktionspartner Dichlor-phenyl-phosphan und Triphenyl-phosphan werden zweckmäßig — unabhängig von der gewählten Reaktionstemperatur — im Molverhältnis von 1 zu mindestens etwa 1, vorzugsweise von 1 zu etwa 2 bis 4, eingesetzt. Bei 300 bis 500 °C wird vorteilhaft so gearbeitet, daß das Dichlor-phenyl-phosphan und das Triphenylphosphan in dem angegebenen Molverhältnis in einem geeigneten Autoklaven oder Druckrohr je nach Temperatureinstellung etwa 10 Minuten bis 12 Stunden gehalten werden. Nach beendeter Umsetzung wird destillativ aufgearbeitet.

Bei der Arbeitsweise bei 500 bis 700 °C wird das Dichlor-phenyl-phosphan/Triphenylphosphan-Gemisch zweckmäßig mit Hilfe einer Dosiervorrichtung in eine geheizte Reaktionszone (z. B. einen elektrisch geheiztes Rohr) eindosiert. Das aus der Reaktionszone austretende Reaktionsgemisch wird dann destillativ gereinigt. Diese Verfahrensvariante kann auch unter Hindurchleiten eines Gasstromes (z. B. Stickstoff, Argon, aber auch Chlorwasserstoff) mit Vorteil ausgeführt werden.

Sowohl für die Variante bei 300 bis 500 °C als auch für diejenige bei 500 bis 700 °C ist eine diskontinuierliche und eine kontinuierliche Verfahrensweise möglich ; die kontinuierliche Verfahrensweise eignet sich besonders für die unter Normaldruck durchgeführte Verfahrensweise bei 500 bis 700 °C.

Die Erfindung liefert bei hohen Umsätzen hohe bis nahezu quantitative Ausbeuten an Chlor-diphenyl-phosphan. Wegen dieser günstigen Möglichkeit der katalysatorfreien Umwandlung von Dichlor-phenyl-phosphan in Chlor-diphenyl-phosphan stellt die Erfindung einen erheblichen Fortschritt auf diesem Gebiet dar.

Die nachfolgenden Beispiele sollen nun der weiteren Erläuterung der Erfindung dienen. Nach den (Erfindungs)-Beispielen folgen denn noch zwei Vergleichsbeispiele, welche zeigen, daß bei ca. 280 °C unter autogenem Druck in ca. 6 stündiger Reaktionszeit ohne Katalysatorzusatz nur eine minimale Umsetzung von Triphenylphosphan und Phosphortrichlorid erfolgt, sowie daß bei den gleichen Temperatur- und Druckbedingungen zwischen Dichlor-phenyl-phosphan und Triphenylphosphan praktisch keine Reaktion eintritt.

A. Erfindungsbeispiele

## Beispiel 1

20 g (= 0,076 Mol) Triphenylphosphan und 40 g (= 0,223 Mol) Dichlor-phenyl-phosphan werden in einem Bombenrohr mit einem Volumen von 90 ml 6 Stunden bei 340-350 °C gehalten. Dann wird destilliert. Man erhält 24 g (= 0,134 Mol) Dichlor-phenyl-phosphan (Kp. : 56-58 °C/26.6 Pa) und 28 g (= 0,127 Mol) Chlor-diphenyl-phosphan (Kp. : 115-120 °C/26.6 Pa) und schließlich 2 g Triphenylphosphan. Die Ausbeute an Chlor-diphenyl-phosphan beträgt 93 % d. Th. bei einem Umsatz von 90 % d. Th., bezogen auf Triphenylphosphan.

## Beispiel 2

Eine Mischung von 40 g (= 0,153 Mol) Triphenylphosphan und 80 g (= 0,446 Mol) Dichlor-phenyl-phosphan wird während 25 min. eingetropft in ein schwach schräg geneigtes, 60 cm langes, mit Quarz-Raschigringen von 6 mm Durchmesser gefülltes mit Stickstoff gespültes Quarzrohr, das sich in einem auf

620 °C geheizten elektrischen Ofen befindet. Das in der Vorlage sich sammelnde Reaktionsgemisch wird destilliert. Man erhält 50 g (= 0,28 Mol) Dichlor-phenyl-phosphan und 40 g (= 0,182 Mol) Chlor-diphenyl-phosphan neben nicht umgesetzten Triphenylphosphan und 8 g einer tiefsiedenden Fraktion, die überwiegend Phosphortrichlorid darstellt. Bezogen auf das Triphenylphosphan erhält man bei einem 59 %igem Umsatz eine etwa quantitative Ausbeute an Chlor-diphenyl-phosphan.

B. Vergleichsbeispiele

### Vergleichsbeispiel 1

20 g (= 0,076 Mol) Triphenylphosphan und 40 g (= 0,291 Mol) frisch destilliertes Phosphortrichlorid (Molverhältnis 1 : 3,82) werden in einem Bombenrohr mit einem Volumen von ca. 90 ml 6 Stunden bei 280 °C gehalten. Anschließend wird destilliert. Man erhält neben nicht umgesetztem Triphenylphosphan und Phosphortrichlorid ca. 300 mg (= 1,68 mMol) Dichlor-phenyl-phosphan und ca. 350 mg (= 1,59 mMol) Chlor-diphenyl-phosphan (Molverhältnis 1,06 : 1 ; Gewichtsangaben aufgrund einer gaschromatographischen Analyse eines Rohdestillates). Der Umsatz beträgt an Dichlor-phenyl-phosphan und Chlor-diphenyl-phosphan etwa 2 %.

### Vergleichsbeispiel 2

20 g (= 0,076 Mol) Triphenylphosphan und 40 g (= 0,223 Mol) Dichlor-phenyl-phosphan (Molverhältnis 1 : 2,94) werden in einem Bombenrohr mit einem Volumen von 90 ml 5 Stunden bei 280 °C gehalten. Anschließend wird destilliert. Man erhält neben nicht umgesetztem Triphenylphosphan und Dichlor-phenyl-phosphan ca. 250 mg (= 1,14 mMol) Chlor-diphenyl-phosphan (Gewichtsangabe aufgrund einer gaschromatographischen Analyse eines Rohdestillates). Der Umsatz beträgt 0,75 % d. Th.

## Patentansprüche

1. Verfahren zur Herstellung von Chlor-diphenyl-phosphan durch Umsetzung einer Phosphor-chlor-Verbindung mit Triphenylphosphan bei erhöhter Temperatur, dadurch gekennzeichnet, daß man als Phosphor-chlor-Verbindung Dichlor-phenyl-phosphan verwendet und die Umsetzung bei Temperaturen zwischen 300 und 700 °C durchführt.

2. Verfahren nach Anspruch 1, dadurch gekennzeichnet, daß man die Umsetzung im Temperaturbereich zwischen 300 und 500 °C unter erhöhtem Druck, insbesondere unter autogenem (Über-)druck, durchführt.

3. Verfahren nach Anspruch 1, dadurch gekennzeichnet, daß man die Umsetzung im Temperaturbereich zwischen 500 und 700 °C bei Normaldruck durchführt.

4. Verfahren nach den Ansprüchen 1 bis 3, dadurch gekennzeichnet, daß man die Ausgangsstoffe Dichlor-phenyl-phosphan und Triphenylphosphan im Molverhältnis von 1 zu mindestens etwa 1, vorzugsweise von 1 zu etwa 2 bis 4, umsetzt.

## Claims

1. A process for preparing chlorodiphenylphosphane by reacting a phosphorus-chlorine compound with triphenylphosphane at elevated temperatures, characterized in using dichlorophenylphosphane as phosphorus-chlorine compound and carrying out the reaction at temperatures between 300 and 700 °C.

2. The process as claimed in claim 1, characterized in carrying out the reaction under elevated pressure, in particular under autogenous (superatmospheric) pressure, within the temperature range between 300 and 500 °C.

3. The process as claimed in claim 1, characterized in carrying out the reaction under atmospheric pressure within the temperature range between 500 and 700 °C.

4. The process as claimed in claims 1 to 3, characterized in reacting the starting materials dichlorophenylphosphane and triphenylphosphane in a molar ratio of 1 to at least about 1, preferably 1 to about 2 to 4.

## Revendications

1. Procédé pour préparer le chloro-diphényl-phosphorane par réaction d'un composé chloré du phosphore avec le triphényl-phosphorane, à température élevée, procédé caractérisé en ce qu'on utilise le dichloro-phényl-phosphorane comme composé chloré du phosphore et on effectue la réaction à des températures comprises entre 300 et 700 °C.

2. Procédé selon la revendication 1 caractérisé en ce qu'on effectue la réaction dans un intervalle de température allant de 300 à 500 °C et sous pression élevée, plus particulièrement sous la pression (surpression) autogène.

3. Procédé selon la revendication 1 caractérisé en ce qu'on effectue la réaction dans l'intervalle de température allant de 500 à 700 °C et sous la pression normale.

4. Procédé selon l'une quelconque des revendications 1 à 3, caractérisé en ce qu'on fait réagir les corps de départ, c'est-à-dire le dichloro-phényl-phosphorane et le triphényl-phosphorane, dans un rapport molaire de 1 à au moins environ 1, de préférence de 1 à environ 2 à 4.